Europäisches Patentamt

European Patent Office

Office européen des brevets

(11) Veröffentlichungsnummer: **0 164 708**
**B1**

(12) **EUROPÄISCHE PATENTSCHRIFT**

(45) Veröffentlichungstag der Patentschrift: **25.04.90**

(21) Anmeldenummer: **85107072.2**

(22) Anmeldetag: **07.06.85**

(51) Int. Cl.⁵: $A\ 23\ L\ 1/0522$, $A\ 61\ K\ 31/72$

(54) **Verwendung von Hydroxylstärke.**

(30) Priorität: **13.06.84 DE 3421954**

(43) Veröffentlichungstag der Anmeldung:
**18.12.85 Patentblatt 85/51**

(45) Bekanntmachung des Hinweises auf die
Patenterteilung:
**25.04.90 Patentblatt 90/17**

(84) Benannte Vertragsstaaten:
**AT CH DE GB LI**

(56) Entgegenhaltungen:
**EP-A-0 019 403**
**GB-A-1 422 345**
**JP-A-58 186 304**
**US-A-3 628 969**

**Die Akte enthält technische Angaben, die nach dem Eingang der Anmeldung eingereicht wurden und die nicht in dieser Patentschrift enthalten sind.**

(73) Patentinhaber: **Reiss, Christiane, Dr.**
**Weiherstrasse 17**
**D-8520 Erlangen (DE)**

(72) Erfinder: **Reiss, Christiane, Dr.**
**Weiherstrasse 17**
**D-8520 Erlangen (DE)**

(74) Vertreter: **Görtz, Dr. Fuchs, Dr. Luderschmidt**
**Patentanwälte**
**Abraham-Lincoln-Strasse 7 Postfach 46 60**
**D-6200 Wiesbaden (DE)**

Courier Press, Leamington Spa, England.

**Beschreibung**

Gegenstand der vorliegenden Erfindung ist die Verwendung von Hydroxyethylstärke als Kohlenhydratkomponente bei der Herstellung eines oral oder enteral zu verabreichenden diätetischen Nährmittels zur Bereitstellung von Energie in Form von Glukose bei gestörter Insulinsekretion und/oder bei bestehender Insulinresistenz.

Zahlreiche pathologische Zustände wie Diabetes mellitus und postoperative Insulinresistenz erfordern eine Kohlenhydratzufuhr, die hohe Blutzuckerspitzen vermeidet. Es verbieten sich daher rasch resorbierbare, niedermolekulare Kohlenhydrate. Erwünscht ist vielmehr eine sehr hochmolekulare Kohlenhydratkomponente, möglichst in Form von Stärke, die allmählich Glukose freigibt.

Alle bisher zur Ernährung eingesetzte Stärkederivate sind jedoch nicht wasserlöslich und kleistern spätestens beim Erhitzen. Dies schließt ihren Einsatz als Kohlenhydratkomponente in Trink- und Sondernahrung aus.

Der Erfindung liegt die Aufgabe zugrunde, neuartige wasserlösliche, langsam resorbierende Kohlenhydrate aufzufinden, die sich in den oben genannten Fällen vorteilhaft einsetzen lassen und somit für die enterale Ernährung, d.h. für eine Zufuhr über den Mund bzw. den Magendarmtrakt, geeignet sind.

Die Aufgabe wird erfindungsgemäß durch die im Anspruch näher bezeichnete Verwendung von Hydroxyethylstärke gelöst. Es hat sich überraschenderweise gezeigt, daß sich für den erfindungsgemäßen Zweck besonders die Hydroxyethylstärke, die man auch als O-(2-Hydroxyethyl)-amylopektinhydrolysat bezeichnet, eignet, welche bei oraler Applikation nur eine geringe Erhöhung des Blutzuckerspiegels zur Folge hat. Eine Resorption und fermentative Aufspaltung ist damit bewiesen. Während jedoch Amylopektin, vor allem aufgeschlossene Getreidestärke, bei der Resorption im Darm zu einer Erhöhung des Blutzuckerspiegels führt, wird durch die Modifikation des partiell hydrolysierten Amylopektin-Moleküls die Spaltung zu den Glykoseeinheiten verzögert, weshalb die Glukosebildung und damit der Blutzuckerspiegel nicht so schnell ansteigt, was besonders bei gestörter Insulinsekretion und bei Patienten mit Diabetes-Erscheinungen von Bedeutung ist. Daher eignet sich dieses modifizierte Stärkeprodukt besonders gut als Kohlenhydratkomponente bei der Herstellung eines oral oder enteral zu verabreichenden diätetischen Nährmittels zur Bereitstellung von Energie in Form von Glukose für Patienten mit gestörter Insulinsekretion, also z.B. für Patienten mit Diabetes mellitus, und bei postoperativer Insulinresistenz.

Hydroxyethylstärke liegt als weißes, geruch- und geschmackloses Pulver vor, das in Wasser leicht löslich ist. Es wird durch Behandeln einer gereinigten Amylopektinfraktion, hauptsächlich von Getreidestärken, mit verdünnter Salzsäure bis zum gewünschten Abbaugrad und Versetzen des neutralisierten Amylopektingemisches mit verdünnter Natronlauge und anschließend Ethylenoxid erhalten (vgl. Die Stärke in der Medizin, von Johannes Seidemann, Verlag Paul Parey, 1972).

Gemäß der GB-A 14 22 345 wird Hydroxyethylstärke als Ersatzstoff für Kohlenhydrate verwendet, wobei die als Ersatzstoff verwendete Hydroxyethylstärke im wesentlichen nicht verdaubar ist. Durch diese Maßnahme soll dem Körper praktisch keine Energie zugeführt werden.

Hydroxyethylstärke wird in der EP-A 0 019 403 als Träger für biologisch aktive Verbindungen, z.B. Arzneistoffe, eingesetzt. Gemäß der EP-A wird das Arzneimittel an den Hydroxyethylstärke-Träger gebunden, wodurch ein Produkt bereitgestellt wird, das sich leichter verabreichen läßt.

Hydroxyethylstärke wird zur Zeit als Plasma-Ersatzstoff genutzt. Unter Plasma-Ersatzstoffen versteht man insbesondere kolloidale Substanzen, deren wäßrige Lösungen nach intravenöser Infusion ein vermindertes Blutvolumen für eine geraume Zeit normalisieren und plasmatische Blutanteile ersetzen können. Die vorteilhafte Verwendung dieses Materials als Kohlenhydratkomponente bei der Herstellung eines oral applizierbaren diätetischen Nährmittels ist deshalb so überraschend, weil andere Plasma-Expander, auch solche auf Kohlenhydratbasis, wie z.B. Dextran, als Nährmittel ganz ungeeignet sind.

Es wurden Untersuchungen mit 40 g und 80 g Portionen Hydroxyethylstärke durchgeführt. Der überraschend geringe Anstieg des Blutzuckerspiegels im Vergleich zu normalerweise eingesetzten Kohlenhydraten macht Hydroxyethylstärke besonders geeignet für alle Patienten mit gestörter Insulinsekretion und verhindert Entgleisungen des Blutzuckerspiegels. Das Maximum des Blutzuckerspiegels lag bei Anwendung von Hydroxyethylstärke stets unter 100 mg/100 ml, während bei den üblicherweise verwendeten Kohlenhydraten die Anstiege ca. 3- bis 5-mal höher waren.

Erfindungsgemäß kann die Hydroxyethylstärke allein als Kohlenhydratkomponente oder mit anderen Kohlenhydraten, beispielsweise mit Maltodextrin, bei der Herstellung der diätetischen Nährmittel verwendet werden. Ein Mischungsbeispiel lautet: 50 Maltodextrin und 200 g Hydroxyethylstärke.

Die Hydroxyethylstärke kann weiterhin entweder allein oder mit anderen Nährstoffen als Pulver oder in flüssiger Form angeboten werden.

Die übliche Dosis der bei der erfindungsgemäßen Verwendung vorgesehenen Kohlenhydratzusammensetzung hängt von der behandelten Person, der vorliegenden Erkrankung und der Art der Zufuhr ab und beträgt beispielsweise 0,5 bis 7 g pro kg Körpergewicht und Tag.

**Patentanspruch**

Verwendung von Hydroxyethylstärke als Kohlenhydratkomponente bei der Herstellung eines oral oder enteral zu verabreichenden diätetischen Nährmittels zur Bereitstellung von Energie in Form von Glukose bei gestörter Insulinsekretion und/oder bei bestehender Insulinresistenz.

**Revendication**

Utilisation de l'hydroxy-ethyl-amidon comme composant glucide à l'occasion de la fabrication d'un produit alimentaire diététique qu'il faut administrer d'une manière orale ou entérique, pour la mise à disposition d'énergie sous forme de glucose lors d'une sécrétion de l'insuline dérangée et/ou d'une résistance à l'insuline existante.

**Claim**

Use of hydroxy-ethyl starch as a carbohydrate component for the production of a dietetic nutrient to be administered orally or by the intestinal route (enterally) to supply energy in the form of glucose by disturbed insulin secretion (dysinsulinosis) and/or by existing insulin resistance.